Europäisches Patentamt

European Patent Office

Office européen des brevets

(19)

(11) Publication number: **0 247 441**
**A1**

# EUROPEAN PATENT APPLICATION

(21) Application number: **87106965.4**

(22) Date of filing: **14.05.87**

(51) Int. Cl.⁴: **G11B 7/00** , **G11B 7/08** , **G11B 7/24** , **G11B 7/26**

(30) Priority: **21.05.86 JP 114553/86**

(43) Date of publication of application:
**02.12.87 Bulletin 87/49**

(84) Designated Contracting States:
**DE GB**

(71) Applicant: **HITACHI, LTD.**
**6, Kanda Surugadai 4-chome**
**Chiyoda-ku Tokyo 101(JP)**

(72) Inventor: **Kaneda, Aizo**
**2456-47, Kamiyabe-cho Totsuka-ku**
**Yokohama-shi Kanagawa-ken(JP)**
Inventor: **Matsuzaki, Atsushi**
**2-41-908, Asahigaoka Nerima-ku**
**Tokyo(JP)**
Inventor: **Yoshii, Masaki**
**2295-17-103, Shimonagaya-cho Kounan-ku**
**Yokohama-shi Kanagawa-ken(JP)**
Inventor: **Sato, Hidemi**
**3404-35, Nakada-cho Izumi-ku**
**Yokohama-shi Kanagawa-ken(JP)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**D-8000 München 86(DE)**

(54) **Optical information recording/reproducing tape, process for production thereof, and recording/reproducing method therefor.**

(57) There is provided an optical information recording and reproducing tape (1) suitable for high-capacity image or digital data files and computer external memory. The recording and reproduction of optical information are achieved by scanning the tape (1) with a laser beam aslant at a certain angle $\theta$ with respect to the tape running direction (3). The recording tape (1) is capable of densely recording a large amount of optical information, taking advantage of tape's large surface area. There are also provided a method for producing the tape and a method for recording and reproducing information on the tape.

FIG. 8

FIG. 1

## OPTICAL INFORMATION RECORDING/REPRODUCING TAPE, PROCESS FOR PRODUCTION THEREOF, AND RECORDING/REPRODUCING METHOD THEREFOR

### BACKGROUND OF THE INVENTION

The present invention relates to a tape for recording and reproducing information by means of laser beam, a process for producing said tape, and a method for recording and reproducing information on said tape. More particularly, it relates to an optical information recording and reproducing tape suitable for use as an external memory unit and a high-capacity image or digital data file, a process for producing said tape, and an information recording and reproducing method for said tape.

There have been proposed high-capacity information recording media known as read-only optical disk (designed to reproduce densely recorded information pits by means of laser beam), DRAW (Direct Read After Write) optical disk (designed to write information pits by subjecting the recording film to heat fusion or phase change), and erasable magneto-optical recording disk (designed to record and reproduce information by utilizing the Kerr effect of a magneto-optical recording medium). They are being put to practical use.

There are several patents relating to these recording media. There is disclosed a read-only optical disk and drive system therefor in, for example, U.S. Patent No. 4,041,530 and Japanese Patent Laid-open No. 37407/1972; there is disclosed a phase-change type (DRAW) optical disk and drive system therefor in, for example, U.S. Patent No. 3,530,441 and Japanese Patent Publication No. 26897/1972; and there is disclosed a magneto-optical disk and drive system therefor in, for example, U.S. Patent No. 3,368,209.

The advantage of the optical disk is that information can be recorded densely on account of fine pits, it permits rapid access to the recorded information, and it only needs a drive system of comparatively simple mechanism. On the other hand, it has the disadvantage that the amount of information that can be recorded on each disk is limited depending on the disk size because the recording of information is by signal pits formed continuously in the concentric circles on the disk. For example, in the case of an optical disk for digital data file, 300 mm in diameter, the amount of information that can be recorded on one side is limited to 1.3 Gbytes or 54,000 frames of image.

For recording a comparatively small amount of information, it is necessary to provides optical disks of different sizes, say, 200 mm, 130 mm, and 120 mm in diameter. This leads to a disadvantage that different production facilities and different drive units are required according to the disk size and they cannot be used in common.

This is not the case with magnetic tape. It does not make it necessary to change the production facilities and drive units according to the amount of information recorded because it has a variable recording area. The disadvantage of magnetic tape is that it requires larger information signals for recording than optical disks and it does not permit subtle manipulation of recorded signals. In other words, magnetic tape is not capable of high-density recording. Thus, when it comes to high-volume recording and reproduction, magnetic tape cannot beat optical disks. An additional disadvantage of magnetic tape is that it takes a longer access time than optical disks.

Although there is an optical disk system that exchanges disks automatically and continuously by a mechanical means; but the mechanism is inevitably elaborate and slow in speed. For this reason, the magnetic tape is still dominant as a large-capacity data file or an external memory unit for computers where frequent access is not required.

As mentioned above, the conventional technology for recording a large amount of information has its limit. Especially, optical disks need different production facilities and different drive units according to their recording capacity and are poor in productivity.

### SUMMARY OF THE INVENTION

It is an object of the present invention to provide a recording medium in a tape form capable of densely recording optical information signals and having a higher recording capacity than optical disks, taking advantage of tape's large surface area. It is another object of the invention to provide a process for producing said recording medium and a method of recording and reproducing information for said recording medium.

The above-mentioned objects are achieved by (1) performing recording and reproduction with a lasser beam which scans the tape surface aslant at a certain angle with respect to the tape running direction, whereby making maximum use of the tape area, (2) forming signal track grooves aslant at a certain angle with respect to the tape running direction, whereby permitting the light actuator to follow information signals no matter how small the information signal pits on the track may be, and thus realizing the high-density recording and reproduction, (3) a scanning mechanism composed of an optical pickup, an actuator, and a prism which rotates about an axis coinciding with the optical axis of the optical pickup and actuator so that it reflects at a right angle the laser beam radiating along the optical axis and thereby records or reproduces information signals on the track grooves running aslant with respect to the rotating axis, and (4) a control mechanism which runs the tape at a high speed when information is being accessed and restores the tape speed immediately before the desired address, thereby permitting accurate access to the desired address.

The optical information recording tape, in which the tracking grooves are formed aslant at a certain angle with respect to the tape running direction in order to make maximum use of the tape area, can be produced in the following steps. At first, transparent tape of synthetic resin is continuously produced by extrusion. Then, grooves are formed on the tape by hot stamping with a roller having a male pattern of the grooves. Finally, the tape undergoes continuous vacuum deposition and provided with a protective film by continuous vacuum deposition or coating.

The transparent substrate tape is produced from a polyester resin or acrylic resin capable of extrusion molding, having a low birefringence, and superior in rubbing resistance.

The roller (stamper) to engrave the grooves has minute protuberances corresponding to the grooves. They are formed by the so-called lift-off process which involves the following steps. A substrate metal film of Ni or Cr is formed on a steel roller which has undergone precision grinding. The substrate metal film is coated with a resist, which is subsequently exposed to laser beam and developed. The substrate metal film is vacuum-deposited with Ni or Cr. Finally, the resist is removed.

The recording medium may be of phase change type (such as $Sb_2Se_3$ used for the optical disk), of photochromics type based on organic dye-binders, or of PST pit type. The first type or the magneto-optical recording medium is preferable.

The protective film for the recording medium may be formed from a thermoplastic resin of hot melt type or a UV-curable acrylic resin or epoxy resin which is used for the optical disk. The latter UV curing resins are superior in productivity where coating and curing are continuously performed.

The tape for optical recording and reproduction of information signals can be produced by the combination of continuous processes. The recording capacity depends only on the tape length; therefore, it is not necessary to change the production process and facilities for the tape according to the recording capacity desired.

The fact that the information track grooves on the tape are formed aslant at a certain angle with respect to the tape running direction realizes the high-density recording over almost the entire tape area even when the tracks are as close as 1.6 μm to one another. In addition, the tracking mechanism of the optical actuator prevents tracking errors resulting from tape vibration.

The optical information recording and reproducing tape is run aslant at a certain angle with respect to the optical axis of the optical pickup and actuator. The track grooves on the running tape are accurately scanned with laser beam reflected at a right angle by a prism which rotates on the optical axis of the optical pickup and actuator.

The tracking position may be controlled by the three-spot method or one-spot method. The latter is preferable for recording and reproduction. This method may be carried out by using the mechanism of the drive unit for DRAW-type optical disks. According to the present invention, the optical pickup and actuator are not turned for scanning. By virtue of this feature, the auto-focussing mechanism and tracking control mechanism of the actuator can accurately track signals without being adversely affected by centrifugal force and vibrations resulting from rotation. This is a great advantage over the conventional actuator which is designed such that the fine adjustment of the objective lens or mirror is accomplished by electromagnets. In this case it is indispensable to perform scanning by the rotation of the beam itself which is achieved by rotating the above-mentioned prism. Incidentally, when a new pickup and actuator of optical IC type based on the photoelectric effect or photo-acoustic effect become available in the future, they would be used to scan signals on the tape running aslant at a certain angle with respect to the axis on which they rotate.

An additional optical system may be placed between the prism and the tape so that the laser beam reflected at a right angle by the prism converges into an extremely small focus.

The tape of the invention permits the high-speed access of the information recorded thereon owing to the address information signal area formed at the upper edge of the tape. In normal operation, the tape and prism are run in synchronism with each other by the servo motors and synchronizing circuits. In the addressing mode, the tape alone runs at a high speed so that the optical signals that go across the tracks are counted by a counter, and when a prescribed count is reached, the prism begins to rotate and the tape speed is restored. This mechanism makes it possible to search for a desired address quickly. As for access time, the tape of the invention is comparable to or superior to the optical disk of the same recording capacity in principle because the tracks are arranged as close as those of the optical disk.

BRIEF DESCRIPTION OF THE DRAWINGS

Fig. 1 is a plan view of the optical information recording and reproducing tape pertaining to the present invention.

Fig. 2 is a sectional view across the thickness of the tape shown in Fig. 1.

Fig. 3 is a conceptual representation of the coding system for signal recording pertaining to the present invention.

Fig. 4 is a conceptual representation of the process for forming the tracking grooves in the production of the optical information recording and reproducing tape pertaining to the present invention.

Fig. 5 is a flow chart of the process for forming the roller stamper.

Fig. 6 is a side view showing the drive mechanism for the optical information recording and reproducing tape pertaining to the present invention.

Fig. 7 is a plan view of the drive mechanism as shown in Fig. 6.

Fig. 8 is a sectional view of the drive mechanism as shown in Fig. 6.

DETAILED DESCRIPTION OF THE PREFERRED EMBODIMENTS

In what follows, an embodiment of the present invention will be described in detail.

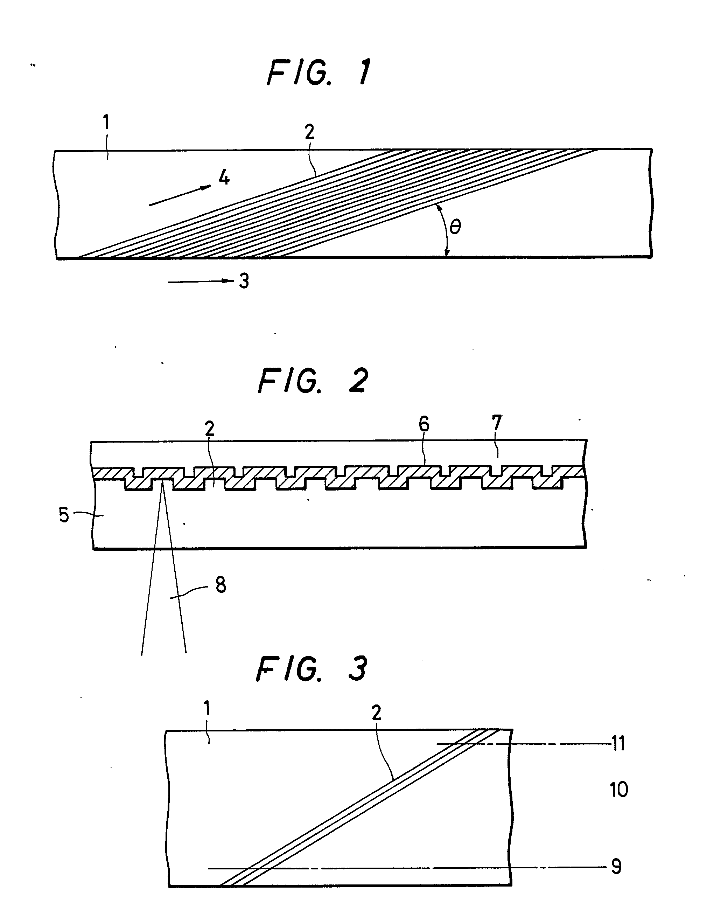

The optical information recording tape 1 pertaining to the present invention as shown in plan in Fig. 1 has grooves 2 which are formed aslant at an angle $\theta$ with respect to the tape running direction 3. The pitch of the grooves is 1.6 $\mu$m. The angle $\theta$ is defined by $\ell/L$, where $\ell$ is the tape width and L is the length of the tape which is wound around the cylinder (mentioned later). Tracking one groove records and reproduces one frame of image. Thus the optical information recording tape of the same size as a 1-hour VTR tape can store 360,000 frames of still picture, compared to 54,000 frames in the case of an optical disk 300 mm in diameter.

The optical information recording tape 1 pertaining to the present invention as shown in section in Fig. 2 is composed of a grooved transparent polyester tape 5, an optical recorder medium 6, an enhancing layer (not shown), and a protective film 7. The recording medium 6 is a continuous $Sb_2Se_3$ film about 1000 Å thick formed on the tape by vacuum deposition. The recording medium 6 is covered with the enhancing layer and further with the protective film 7 which is formed by continuously curing roller-coated UV-curable epoxy-modified acrylic resin with UV light. Information is recorded on and reproduced from the tape by irradiating the recording medium with laser beam through the transparent polyester tape 5.

The optical information recording tape 1 pertaining to the present invention has the signal coding system as shown in Fig. 3. The information address signal area 9 is one edge of the tape, the information signal area 10 is at the center of the tape, and the ECC (error signal correction code) area 11 is at the other edge of the tape. The address signal area is supplied with pit signals automatically by the tape drive unit after the completion of the tape. (In the case of optical disk, the address signals are entered in the form of pit signals at the time of stamping.)

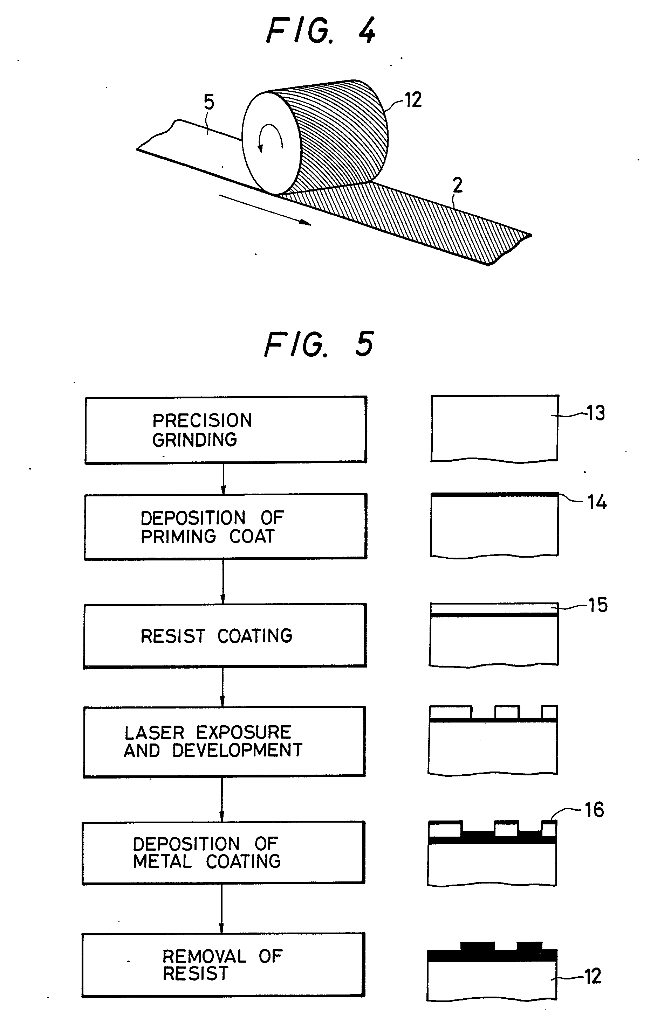

The track grooves on the transparent polyester tape 5 are formed by the method schematically shown in Fig. 4. The grooves are formed by transferring the pattern of grooves fromed by protuberances on the roller stamper 12. To achieve transfer, the stamper 12 is heated with a built-in heater and turned continuously under pressure on the transparent polyester tape.

The roller stamper 12 is formed by the process as shown in Fig. 5. A roller of high chrome steel (STAVAX), 62 mm in diameter and 20 mm long, undergoes precision grinding to give a surface smoothness of 0.005 $\mu$m Rmax. On the roll surface is formed a 1000 Å thick Ni substrate film 14 by vacuum deposition. The Ni substrate film 14 is coated with positive resist 15 (MP-1350, made by Phipley Co., Ltd.). After drying, the resist is exposed to laser beam using an Ar laser exposure machine and then developed. Each part of the resist layer remaining after development has a tapered cross section as illustrated. Vacuum deposition with Ni in a thickness of 0.20 $\mu$m is performed again. Finally, the resist layer is removed together with the Ni layer 16 vacuum-deposited thereon. Thus the protuberances corresponding to the desired grooves are formed on the Ni substrate film. This process, called lift-off process, provides a high S/N ratio ($\geq$53 dB) on account of the good quality of the substrate film.

The exposure with laser beam is carried out in the following manner. While the resist-coated roller is turned half, the Ar laser source is moved across the roller width (or the tape width $\ell$) along the axis of rotation of the roller. (The direction of laser beam is perpendicular to the axis of rotation.) The laser source is turned off and restored. The exposure for the remaining half turn is carried out in the same manner. For each exposure step, the laser source is repositioned at a pitch of 1.6 $\mu$m. In actual operation, the laser source is stationary and the roller is moved back and forth.

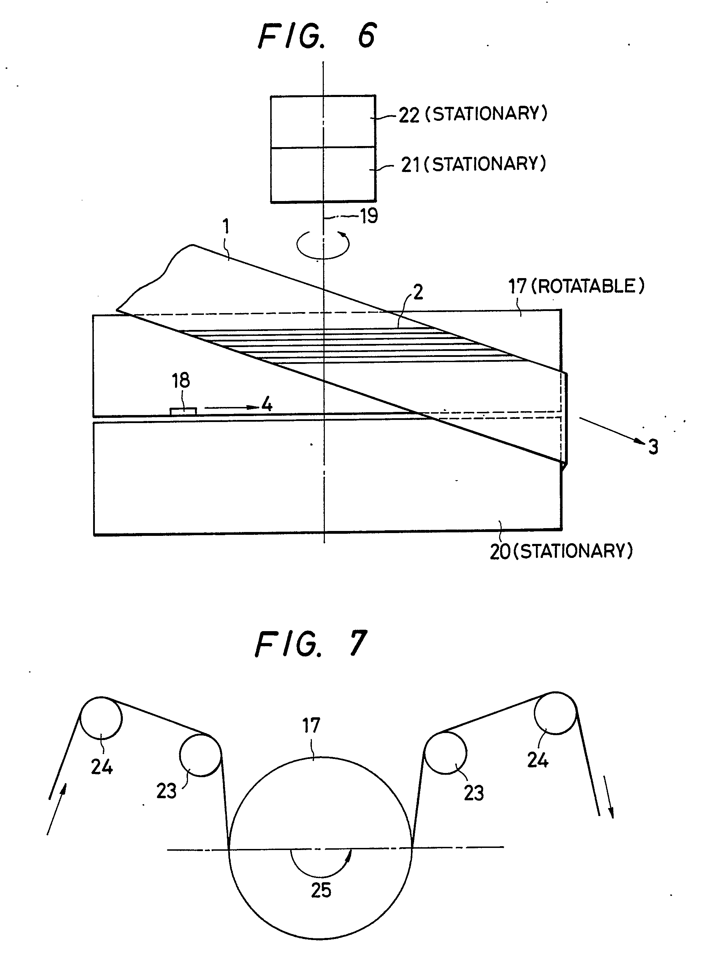

The optical information recording and reproducing tape pertaining to the present invention is driven by the drive mechanism schematically shown in Fig. 6. The tape 1 passes around the rotating cylinder 17 having the window 18 for semiconductor laser beam. The rotating cylinder 17 and the window 18 turn on the axis 19. The tape 1 is positioned aslant at an angle of $\theta$ with respect to the direction 4 in which the window for laser beam moves. On the axis of rotation are positioned the stationary optical pickup 22 and automatic tracking and focus controlling actuator 21 so that their optical axes coincide with each other. In actual setup, the axis 19 of the rotating cylinder and tape guides 23 are inclined an angle of $(90-\theta)°$ from the base plate so that the tape itself is positioned parallel to the base plate. The tape is wound over the angle 25 which is 180°. The cylinder 17 turns at a speed of 1800 rpm. This arrangement permits as much information as one frame to be recorded or reproduced while the cylinder 17 makes a half turn. The tape runs in synchronism with the rotational speed of the cylinder so that the tape advances 1.6 $\mu$m per revolution of the cylinder.

To ensure the smooth running of the tape, the stationary cylinder 20 is provided with grooves for tape guide and the rotating cylinder is provided with parallel grooves which keep the tape afloat. These techniques are the same ones as used in VTR.

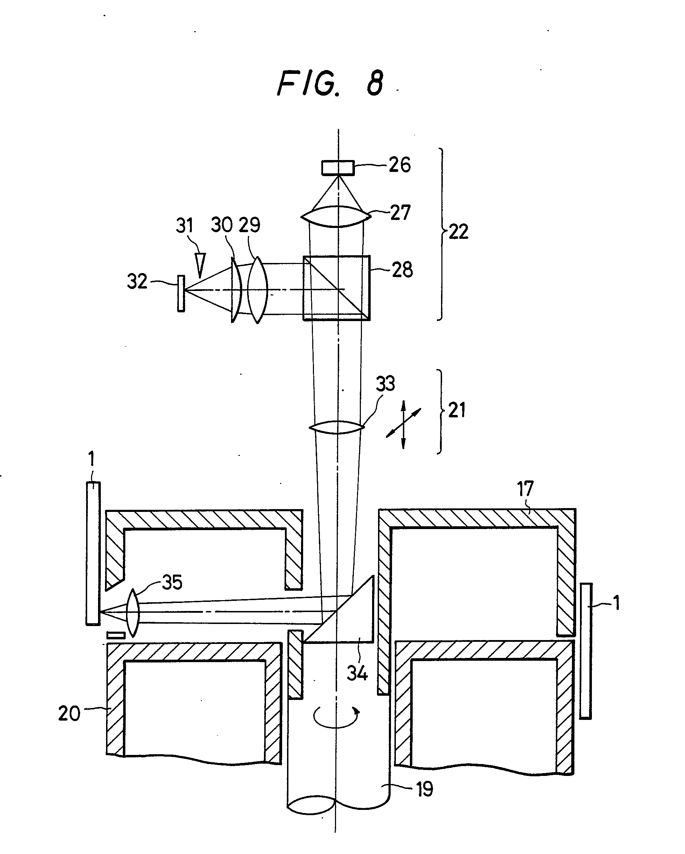

The drive mechanism for the optical information recording and reproducing tape of the invention is shown in section in Fig. 8. The optical pickup 22 has the same conventional optical system as used for DRAW optical disks. The essence of the invention resides in that the prism 34 is mounted on the axis of rotation on which the rotating cylinder 17 turns. The prism reflects the laser beam at a right angle and rotates it in synchronism with the rotation of the cylinder 17 and the window 18. In addition, the auto-focussing and tracking actuator is placed between the optical pickup 22 and the prism 34, coincidentally with their optical axes. The arrangement permits the helical scanning of the tape and the actuator performs the correct tracking despite a slight deviation or stretching of the tape. The lens 33 for the actuator may have a lower numerical aperture than the conventional one, but the spot diameter of laser beam may be reduced (0.8 $\mu$m) by providing the object lens 35. Since the actuator is placed outside the rotating system, it performs accurate tracking without being adversely affected by centrifugal force and vibrations resulting from rotation.

The optical information recording and reproducing tape of the invention records automatically and consecutively the address information corresponding to each track number when it records information. For quick access, the cylinder is stopped and the tape alone is run at a high speed. While the tape is running, the number of tracks are counted by detecting the amount of light that changes. When a prescribed count number is reached, the normal operation is resumed and the address information is reproduced. The access time achieved by this system is $1.0 \times 10^{-4}$ s/frame.

According to the present invention, it is possible to densely record information signals and to make maximum use of the tape area, and consequently it is possible to record and reproduce a large amount of information, 200 to 400 times that of optical disks.

Unlike optical disks, it is not necessary to switch the production facilities and drive unit according to the recording capacity. This leads to high productivity.

The optical information recording and reproducing tape of the invention is produced continuously and consequently superior in productivity to optical disks which are produced batchwise. The continuous production is desirable for the clean process which is essential to avoid bit errors.

Owing to the high-speed access mechanism, the access time is $1.0 \times 10^{-4}$ s/frame, which is equal to or shorter than that of optical disks. The tape is capable of recording and reproducing a large amount of information, without any additional unit like a disk exchange mechanism used in the case of optical disks.

## Claims

1. An optical information recording and reproducing tape which comprises an optical recording medium for recording and reproducing optical information by scanning with a laser beam aslant at a certain angle with respect to the tape running direction.

2. An optical information recording and reproducing tape as claimed in Claim 1, wherein the medium has signal track grooves formed aslant at a certain angle with respect to the tape running direction, with one edge thereof being an area for information address signal pits and the other edge being an area for error correction pits.

3. A method for producing an optical information recording and reproducing tape which comprises forming track grooves on a transparent synthetic resin tape, forming an optical recording medium on the transparent synthetic resin tape having the track grooves, and forming a protective layer on the surface of the optical recording medium, said track grooves being formed by turning a roller stamper with protuberances under pressure on the synthetic resin tape thereby transferring the pattern of the track grooves.

4. A method for producing an optical information recording and reproducing tape as claimed in Claim 3, wherein the transparent synthetic resin tape is a transparent polyester tape.

5. A method for producing an optical information recording and reproducing tape as claimed in Claim 3, wherein the optical recording medium is an $Sb_2Se_3$ film formed by vacuum deposition.

6. A method for producing an optical information recording and reproducing tape as claimed in Claim 3, wherein the protective film formed by applying a UV-curable epoxy-modified acrylic resin and subsequently curing the resin continuously with UV light.

7. A method for recording and reproducing information on the optical information recording and reproducing tape which comprises irradiating the tape with a laser beam by using a stationary optical pickup, an auto-focussing and tracking actuator, and a prism which rotates about an axis coinciding with the optical axis of the optical pickup and actuator so that it reflects at a right angle the laser beam radiating along the optical axis, said tape running aslant at a certain angle with respect to the axis of rotation.

8. A method for recording and reproducing information on the optical information recording and reproducing tape as claimed in Claim 7, wherein the prism is mounted within a rotating cylinder.

9. A method for recording and reproducing information on the optical information recording and reproducing tape as claimed in Claim 8, wherein an objective lens is mounted within said rotating cylinder.

## FIG. 1

## FIG. 2

## FIG. 3

# FIG. 4

# FIG. 5

| | |
|---|---|
| PRECISION GRINDING | 13 |
| DEPOSITION OF PRIMING COAT | 14 |
| RESIST COATING | 15 |
| LASER EXPOSURE AND DEVELOPMENT | |
| DEPOSITION OF METAL COATING | 16 |
| REMOVAL OF RESIST | 12 |

# FIG. 6

22 (STATIONARY)

21 (STATIONARY)

—19

1

2

17 (ROTATABLE)

18

4

3

20 (STATIONARY)

# FIG. 7

17

24

23

23

24

25

## FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 6, no. 145 (P-132)[1023], 4th August 1982; & JP - A - 57 64333 (TOKYO DENKI KAGAKU) 19-04-1982 --- | 1 | G 11 B    7/00 G 11 B    7/08 G 11 B    7/24 G 11 B    7/26 |
| X | US-A-3 314 074  (C.H. BECKER) * claim 1;  column 6, line 56 - column 7, line 2; figure 1 * --- | 1,7-9 | |
| A | EP-A-0 076 347  (DRC-SOUNDSTREAM INC.) * page 12, line 30 - page 14, line 4; figures 1, 3-4 * --- | 2,7 | |
| A | EP-A-0 061 194  (TOKYO SHIBAURA DENKI) * claims 1, 2; figure 4 * --- | 1,7-9 | |
| A | EP-A-0 061 584  (TOKYO SHIBAURA DENKI) * page 1, line 2 - page 2, line 18; figure 4 * --- | 2 | TECHNICAL FIELDS SEARCHED (Int. Cl.4) G 11 B    5/00 G 11 B    7/00 G 11 B   11/00 G 11 B   13/00 H 04 N    5/00 |
| A | DE-A-3 202 821  (TOKYO SHIBAURA DENKI) * page 7, lines 8-19;  page 8,lines 4-7 * ---            -/- | 6 | |

The present search report has been drawn up for all claims

| Place of search | Date of completion of the search | Examiner |
|---|---|---|
| BERLIN | 24-08-1987 | ROGNONI M.G.L. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | JOURNAL OF APPLIED PHYSICS, vol. 54, no. 3, March 1983, pages 1256-1260, New York, US; K. WATANABE et al.: "New optical recording material for video disc system" <br> * page 1256, introduction * | 5 | |
| A | US-A-3 823 276 (S. MASLOWSKI et al.) <br> * figures 1, 2 * | | |
| P,A | EP-A-0 184 189 (HITACHI) <br><br> * page 20, line 21 - page 21, line 13; figure 15A * | | |

TECHNICAL FIELDS
SEARCHED (Int. Cl.4)

The present search report has been drawn up for all claims

| Place of search | Date of completion of the search | Examiner |
|---|---|---|
| BERLIN | 24-08-1987 | ROGNONI M.G.L. |